# EUROPEAN PATENT SPECIFICATION

(11) **EP 3 116 268 B1**
(45) Date of publication and mention of the grant of the patent: **19.09.2018**
(21) Application number: 14884740.3
(22) Date of filing: 17.11.2014
(51) Int. Cl.: H04W 52/02, H04W 52/26, H04W 52/14, H04W 52/24, H04W 72/04, H04L 1/00, H04W 88/18

(54) **METHOD AND DEVICE FOR CONTROLLING TRANSMISSION POWER OF MOBILE TERMINAL**
VERFAHREN UND VORRICHTUNG ZUR REGELUNG DER SENDELEISTUNG EINES MOBILEN ENDGERÄTS
PROCÉDÉ ET DISPOSITIF DE RÉGLAGE DE LA PUISSANCE D'ÉMISSION D'UN TERMINAL MOBILE

(30) Priority: 05.03.2014 CN 201410079059
(43) Date of publication of application: 11.01.2017
(73) Proprietor: ZTE Corporation, Shenzhen City, Guangdong Province 518057 (CN)
(72) Inventor: HUO, Yi, Shenzhen Guangdong 518057 (CN); CHEN, Youjian, Shenzhen Guangdong 518057 (CN); GUO, Xiang, Shenzhen Guangdong 518057 (CN); NIE, Guotao, Shenzhen Guangdong 518057 (CN)
(74) Representative: Brevalex
(86) International application number: PCT/CN2014/091310
(87) International publication number: WO 2015/131551

(56) References cited:
- WO-A1-2013/070729
- CN-A- 103 249 132
- US-A1- 2008 056 206
- US-A1- 2013 223 412
- "3rd Generation Partnership Project; Technical Specification Group Radio Access Network; Study on Dedicated Channel (DCH) enhancements for UMTS (Release 12)", 3GPP DRAFT; DRAFT25702-C10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 13 December 2013 (2013-12-13), XP050750321, Retrieved from the Internet: URL:http://www.3gpp.org/ftp/tsg_ran/WG1_RL 1/DRAFT/ [retrieved on 2013-12-13]
- SIEMENS: "SSC for IMS, Proposed Way Forward", 3GPP DRAFT; R1-050318_IMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20050331, 31 March 2005 (2005-03-31), XP050099968, [retrieved on 2005-03-31]
- QUALCOMM INCORPORATED ET AL: "TP on Link simulation results for UL DCH Enhancements", 3GPP DRAFT; R1-133940, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 26 August 2013 (2013-08-26), XP050717029, Retrieved from the Internet: URL:http://www.3gpp.org/ftp/tsg_ran/WG1_RL 1/TSGR1_74/Docs/ [retrieved on 2013-08-26]

## Description

### TECHNICAL FIELD

The disclosure relates to a field of mobile communications, and in particular to a method and a device for controlling transmission power of a mobile terminal.

### BACKGROUND

For a Universal Mobile Telecommunication System (UMTS), transmission through an uplink data channel of a mobile terminal is usually implemented along with transmission through an uplink control channel, but in fact, an average duty ratio of the uplink data channel of the mobile terminal is very low (duty ratio: a proportion of data transmission to a service duration), which means that transmission through the uplink control channel is unnecessary in most of the time. An analysis result shows that due to the fact that uplink system capacity consumed by uplink empty packet data (invalid data packet) exceeds 50% of total uplink system capacity, standby time of the mobile terminal is greatly reduced, which causes unnecessary consumption of transmission power of the mobile terminal.

In a conventional art, transmission power of a mobile terminal is controlled in a manner as follows: a base station demodulates first M (M is a positive integer, and M is smaller than the total number of timeslots of a current Transmission Time Interval (TTI)) timeslots of a data frame transmitted in the TTI (the data frame is demodulated at the same time when the data frame is received), accordingly judges whether the data frame transmitted in the current TTI is a valid data frame or an invalid data frame, and then correspondingly controls the transmission power of the mobile terminal (for example: if the data frame is an invalid data frame, the mobile terminal is controlled to reduce the transmission power; and if the data frame is a valid data frame, the mobile terminal is controlled to keep normal transmission power or increase the transmission power). For an Adaptive Multi-Rate (AMR) speech service, such a judgement method has a certain misjudgement probability, misjudging a valid data frame into an invalid data frame may cause reduction in speech communication quality, and how to reduce a rate of misjudgement about whether a data frame transmitted in a current TTI is a valid data frame or an invalid data frame so as to ensure communication quality of the AMR speech service under the condition of maximally reducing transmission power of a mobile terminal is a problem currently urgent to be solved by a UMTS.

The document "3RD GENERATION partnership project; Technical Specification Group Radio Access Network; Study on Dedicated Channel (DCH) enhancements for UMTS (Release 12)", 3GPP DRAFT; DRAFT25702-C10, 3rd GENERATION PARTNERSHIP PROJECT (3GPP), 13 December 2013 (2013-12-13), XP050750321 discloses DPDCH Frame Early Termination (FET) and Link simulation assumptions for Uplink voice over enhanced DCH.

US2013223412A1 discloses a method and a system to improve frame early termination success rate.

The document "SSC for IMS, Proposed Way Forward", 3GPP DRAFT; R1-050318 IMS, 3rd GENERATION PARTNERSHIP PROJECT (3GPP), vol. RAN WG1, no. Beijing, china; 20050331, 31 March 2005 (2005-03-31), XP050099968 discloses how to overcome the code limitation under the primary scrambling code (PSC) tree.

### SUMMARY

Embodiments of the disclosure are mainly intended to provide a method and a device for controlling transmission power of a mobile terminal, which aims to reduce the transmission power of the mobile terminal and simultaneously improve accuracy of judgement about whether a data frame transmitted in a current TTI is a valid data frame to ensure communication quality of a speech service.

An embodiment of the disclosure provides a method for controlling transmission power of a mobile terminal, which may include that:
a base station acquires, from a buffer module, a Transport Format Combination Indicator (TFCI) and Transport Format Combination (TFC) of a data frame transmitted in a previous TTI by a mobile terminal, and judges whether the data frame is a speech frame according to the acquired TFCI and TFC;
if the data frame is a speech frame, the base station determines that a data frame transmitted in a current TTI by the mobile terminal is a valid data frame; and the determined valid data frame is decoded;
wherein the step of decoding the determined valid data frame comprises:
   in case of correct decoding, the base station sends a control instruction of reducing transmission power to the mobile terminal, and sends a control instruction of increasing the transmission power to the mobile terminal before the current TTI ends.

In an embodiment, after the step that the base station acquires, from the buffer module, the TFCI and TFC of the data frame transmitted in the previous TTI by the mobile terminal and judges whether the data frame is a speech frame according to the acquired TFCI and TFC, the method may further include that:
if the data frame is not a speech frame, the base station demodulates first M timeslots of the data frame transmitted in the current TTI to obtain TFCIs;
if all of the TFCIs obtained by demodulating the M timeslots are 0, it is determined that the data frame transmitted in the current TTI by the mobile terminal is a null data frame; and the base station sends the control instruction of reducing the transmission power to the mobile terminal, and sends the control instruction of increasing the transmission power to the mobile terminal before the current TTI ends.

In an embodiment, after the step that if the data frame is not a speech frame, the first M timeslots of the data frame transmitted in the current TTI are demodulated to obtain the TFCIs, the method may further include that:
it is determined that the data frame transmitted in the current TTI by the mobile terminal is a valid data frame if all of the TFCIs obtained by demodulating the M timeslots are not 0; and
the determined valid data frame is decoded, and in case of correct decoding, the base station sends the control instruction of reducing the transmission power to the mobile terminal, and sends the control instruction of increasing the transmission power to the mobile terminal before the current TTI ends.

In an embodiment, the step that the base station acquires, from the buffer module, the TFCI and TFC of the data frame transmitted in the previous TTI by the mobile terminal and judges whether the data frame is a speech frame according to the acquired TFCI and TFC may include that:
the base station acquires, from the buffer module, the TFCI and TFC of the data frame transmitted in the previous TTI by the mobile terminal; and
it is judged that the data frame is a speech frame if the acquired TFCI is not 0 and the TFC does not include a transmission format of 1*39 or the TFC includes not only a transmission format of 1*148.

In an embodiment, the step that the determined valid data frame is decoded, and in case of correct decoding, the base station sends the control instruction of reducing the transmission power to the mobile terminal, and sends the control instruction of increasing the transmission power to the mobile terminal before the current TTI ends may include that:
the determined valid data frame is decoded in an Lth timeslot of the current TTI, and in case of correct decoding, the base station sends the control instruction of reducing the transmission power to the mobile terminal, and sends the control instruction of increasing the transmission power to the mobile terminal in an Nth timeslot before the current TTI ends.

Another embodiment of the disclosure further provides a device for controlling transmission power of a mobile terminal, which may include a base station, the base station including:
an acquisition module configured to acquire, from a buffer module, a TFCI and TFC of a data frame transmitted in a previous TTI by a mobile terminal;
a judgement module configured to judge whether the data frame is a speech frame according to the acquired TFCI and TFC;
a first determination module configured to, if the data frame is a speech frame, determine that a data frame transmitted in a current TTI by the mobile terminal is a valid data frame; and
a control module configured to decode the determined valid data frame when the data frame transmitted in the current TTI is a valid data frame, wherein the control module is further configured to, in case of correct decoding, send a control instruction of reducing transmission power to the mobile terminal, and send a control instruction of increasing the transmission power to the mobile terminal before the current TTI ends.

In an embodiment, the base station may further include a demodulation module and a second determination module;
the demodulation module may be configured to, if the data frame is not a speech frame, demodulate first M timeslots of the data frame transmitted in the current TTI to obtain TFCIs;
the second determination module may be configured to determine that the data frame transmitted in the current TTI by the mobile terminal is a null data frame if all of the TFCIs obtained by demodulating the M timeslots are 0; and
the control module may further be configured to, when the data frame transmitted in the current TTI by the mobile terminal is a null data frame, send the control instruction of reducing the transmission power to the mobile terminal, and send the control instruction of increasing the transmission power to the mobile terminal before the current TTI ends.

In an embodiment, the base station may further include a third determination module; and
the third determination module may be configured to determine that the data frame transmitted in the current TTI by the mobile terminal is a valid data frame if all of the TFCIs obtained by demodulating the M timeslots are not 0.

In an embodiment, the judgement module may include a judgement unit configured to judge that the data frame is a speech frame if the acquired TFCI is not 0 and the TFC does not include a transmission format of 1*39 or the TFC includes not only a transmission format of 1*148.

In an embodiment, the control module may include a control unit configured to decode the determined valid data frame in an Lth timeslot of the current TTI, and in case of correct decoding, send the control instruction of reducing the transmission power to the mobile terminal, and send the control instruction of increasing the transmission power to the mobile terminal in an Nth timeslot before the current TTI ends.

According to the embodiment of the disclosure, the base station acquires, from the buffer module, the TFCI and TFC of the data frame transmitted in the previous TTI by the mobile terminal, and judges whether the data frame is a speech frame according to the acquired TFCI and TFC; if the data frame is a speech frame, the base station determines that the data frame transmitted in the current TTI by the mobile terminal is a valid data frame; and the determined valid data frame is decoded, and in case of correct decoding, the base station sends the control instruction of reducing the transmission power to the mobile terminal, and sends the control instruction of increasing the transmission power to the mobile terminal before the current TTI ends, so that the transmission power of the mobile terminal may be reduced, and meanwhile, accuracy of judgement about whether the data frame transmitted in the current TTI is a valid data frame is improved to ensure the communication quality of the speech service.

### BRIEF DESCRIPTION OF THE DRAWINGS

Fig. 1 is a flowchart of a first embodiment of a method for controlling transmission power of a mobile terminal according to an embodiment of the disclosure;
Fig. 2 is a TFC list of a data frame transmitted in a TTI in an AMR speech service according to an embodiment of the disclosure;
Fig. 3 is a diagram of a sending characteristic of a data frame of an AMR speech service according to an embodiment of the disclosure;
Fig. 4 is a flowchart of a second embodiment of a method for controlling transmission power of a mobile terminal according to an embodiment of the disclosure;
Fig. 5 is a structure diagram of a first embodiment of a device for controlling transmission power of a mobile terminal according to an embodiment of the disclosure; and
Fig. 6 is a structure diagram of a second embodiment of a device for controlling transmission power of a mobile terminal according to an embodiment of the disclosure.

Achievement of the purpose, function characteristics and advantages of the embodiment of the disclosure will be further described with reference to embodiments and the drawings.

### DETAILED DESCRIPTION

It should be understood that specific embodiments described here are only adopted to explain the disclosure and not intended to limit the disclosure.

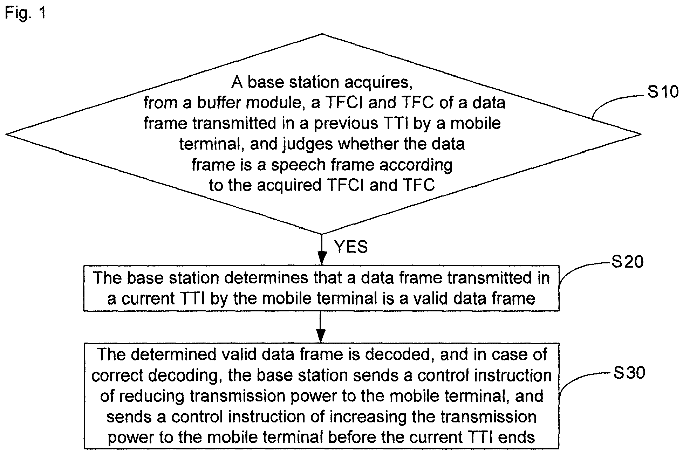

Referring to Fig. 1, Fig. 1 is a flowchart of a first embodiment of a method for controlling transmission power of a mobile terminal according to an embodiment of the disclosure, and the method includes the following steps.

In Step 10: a base station acquires, from a buffer module, a TFCI and TFC of a data frame transmitted in a previous TTI by a mobile terminal, and judges whether the data frame is a speech frame according to the acquired TFCI and TFC, and if the data frame is a speech frame, Step 20 is executed.

The base station establishes a communication connection with the mobile terminal, and the mobile terminal performs data interaction with the base station to implement an AMR speech service according to a TTI. The TTI may be 20ms or more than 20ms, and is, for example, 20ms in the embodiment.

When receiving a data frame transmitted in a current TTI by the mobile terminal, the base station acquires, from the buffer module, the TFCI and TFC of the data frame transmitted in the previous TTI by the mobile terminal, and judges whether the data frame transmitted in the previous TTI is a speech frame according to the TFCI and TFC of the data frame transmitted in the previous TTI.

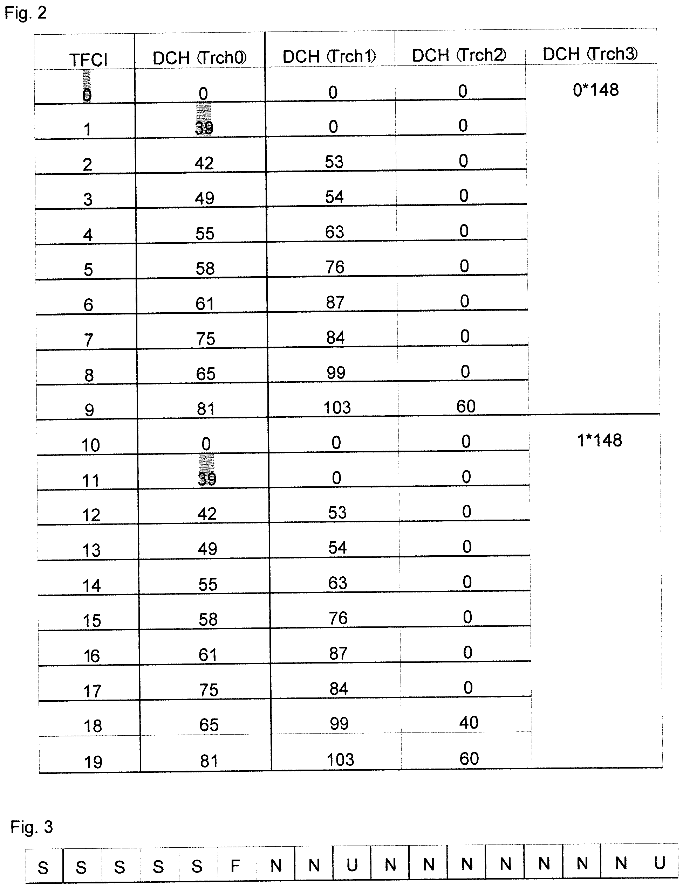

In the AMR speech service, a data frame transmitted in a TTI may have totally 20 TFCIs including 0, 1, 2, 3, 4......19, that is, there are 20 TFCs, specifically as shown in Fig. 2, and DCH(Trch0) represents a size of a first channel, DCH(Trch1) represents a size of a second channel, DCH(Trch2) represents a size of a third channel, DCH(Trch3) represents a size of a fourth channel, and a signalling frame is transmitted by DCH(Trch3); when the TFCI is 0, it is indicated that the data frame is a null data frame; when the TFC includes a transmission format of 1*39 (such as a shaded part in Fig. 2, the TFCIs are 1 and 11), it is indicated that the data frame is a Silence Descriptor (SID) (or comfort noise frame); when the TFC only includes a transmission format of 1*148, it is indicated that the data frame is a non-null data frame, but is also not a speech frame; and TFCs of which TFCIs are 2, 3, 4, 5, 6, 7, 8, 9, 12, 13, 14, 15, 16, 17, 18 and 19 correspond to TFCs including speech frames.

In the AMR speech service, an AMR speech includes a speech frame and an SID (or comfort noise frame), Fig. 3 describes a sending characteristic of a data frame of an AMR speech service (S represents speech, F represents SID_First, U represents SID_update and N represents no data), the SID is divided into SID First and SID Update, and SID First marks beginning of a segment of silence; a segment of continuous silence begins with SSID First, and subsequently includes SID Update and null data frames; an interval between SID First and the first SID Update includes 2 frames, and the 2 frames are null frames; and an interval between SID Update includes 7 frames, and the 7 frames are also null frames. From Fig. 3, it can be seen that a speech frame is followed by a speech frame or SID First, that is, the speech frame is followed by a valid data frame rather than a null data frame.

In an embodiment, the step that it is judged whether the data frame transmitted in the previous TTI is a speech frame according to the acquired TFCI and TFC is implemented as follows: it is judged that the data frame transmitted in the previous TTI is a speech frame if the acquired TFCI is not 0 and the TFC does not include a transmission format of 1*39 or the TFC includes not only a transmission format of 1*148.

In Step 20: if the data frame is a speech frame, the base station determines that a data frame transmitted in a current TTI by the mobile terminal is a valid data frame.

In Step 30: the determined valid data frame is decoded, and in case of correct decoding, the base station sends a control instruction of reducing transmission power to the mobile terminal, and sends a control instruction of increasing the transmission power to the mobile terminal before the current TTI ends.

In the Step 30, the data frame transmitted in the current TTI is decoded, the TTI in the embodiment is 20ms, the TTI includes 30 timeslots, the data frame transmitted in the current TTI may be primarily decoded in an Lth (L is a positive integer, L is smaller than the total number T of timeslots in the TTI, and for example, L is smaller than 30) timeslot of the current TTI, and in case of correct primary decoding, the base station sends the control instruction of reducing the transmission power to the mobile terminal, and sends the control instruction of increasing the transmission power to the mobile terminal in an Nth timeslot before the current TTI ends (i.e., in an Nth to last timeslot of the current TTI); and in case of failed primary decoding, data transmitted in the current TTI may be secondarily decoded, the data frame transmitted in the current TTI is secondarily decoded in a Kth (K is a positive integer, K is smaller than the total number T of the timeslots in the TTI, and K is more than L) timeslot of the current TTI, and in case of correct secondary decoding, the base station sends the control instruction of reducing the transmission power to the mobile terminal, and sends the control instruction of increasing the transmission power to the mobile terminal in the Nth (N is a positive integer, and N is smaller than T) before the current TTI ends. L, N and K may be set according to a practical requirement.

The base station sends the control instruction of reducing the transmission power to the mobile terminal, and for example: the control instruction of reducing the transmission power may be a control instruction of reducing the transmission power by 1dB; and the base station sends the control instruction of increasing the transmission power to the mobile terminal, and for example: the control instruction of increasing the transmission power may be a control instruction of recovering original normal transmission power of the mobile terminal or a control instruction of increasing the transmission power of the mobile terminal to be higher than the original normal transmission power.

According to the embodiment of the disclosure, the base station analyzes the data frame transmitted in the previous TTI by the mobile terminal, and when the data frame transmitted in the previous TTI is a speech frame, it may be determined that the data frame transmitted in the current TTI is a valid data frame without analyzing the data frame transmitted in the current TTI, so that a misjudgement rate may be effectively reduced; the data frame transmitted in the current TTI is decoded, and in case of correct decoding, the base station sends the control instruction of reducing the transmission power to the mobile terminal, and sends the control instruction of increasing the transmission power to the mobile terminal before the current TTI ends; and the transmission power of the mobile terminal is reduced, and meanwhile, accuracy of judgement about whether the data frame transmitted in the current TTI is a valid data frame is improved to ensure communication quality of the speech service, influence on the communication quality is avoided, and unnecessary energy consumption may also be reduced.

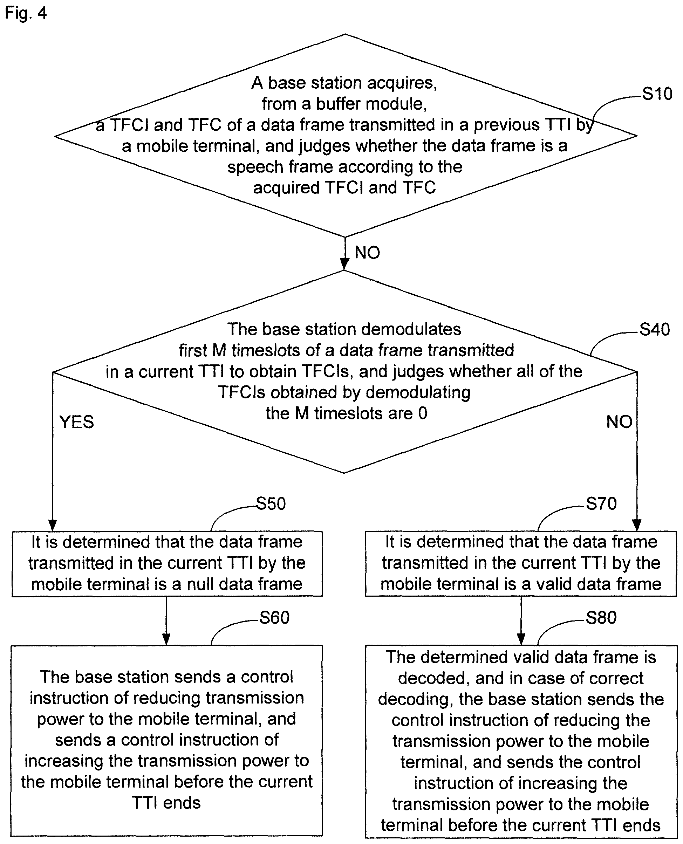

Referring to Fig. 4, Fig. 4 is a flowchart of a second embodiment of a method for controlling transmission power of a mobile terminal according to an embodiment of the disclosure.

Based on the first embodiment of the method for controlling the transmission power of the mobile terminal, if a judgement result of Step 10 indicates that the data frame transmitted in the previous TTI is not a speech frame, after Step 10, the method further includes the following steps.

In Step 40: the base station demodulates first M timeslots of the data frame transmitted in the current TTI to obtain TFCIs, and judges whether all of the TFCIs obtained by demodulating the M timeslots are 0, Step 50 is executed if all of the TFCIs obtained by demodulating the M timeslots are 0, and Step 70 is executed if all of the TFCIs obtained by demodulating the M timeslots are not 0.

M is valued to be a positive integer, and is smaller than the total number T of the timeslots in the TTI, and M is less than or equal to L. M may be set according to a practical requirement.

In the Step 40, when the first M timeslots of the data frame transmitted in the current TTI are demodulated to obtain the TFCIs, M TFCIs may be obtained.

In Step 50: it is determined that the data frame transmitted in the current TTI by the mobile terminal is a null data frame.

In Step 60: the base station sends the control instruction of reducing the transmission power to the mobile terminal, and sends the control instruction of increasing the transmission power to the mobile terminal before the current TTI ends.

In the Step 60, the base station sends the control instruction of reducing the transmission power to the mobile terminal, and for example: the control instruction of reducing the transmission power may be a control instruction of reducing the transmission power by 1dB; and the base station sends the control instruction of increasing the transmission power to the mobile terminal, and for example: the control instruction of increasing the transmission power may be a control instruction of recovering the original normal transmission power of the mobile terminal or a control instruction of increasing the transmission power of the mobile terminal to be higher than the original normal transmission power. During specific implementation, the step that the base station sends the control instruction of increasing the transmission power to the mobile terminal before the current TTI ends may be implemented as follows: the base station sends the control instruction of increasing the transmission power to the mobile terminal in the Nth (N is a positive integer and N is smaller than T) timeslot before the current TTI ends.

In Step 70: it is determined that the data frame transmitted in the current TTI by the mobile terminal is a valid data frame, and then Step 80 is executed.

In the Step 80: the determined valid data frame is decoded, and in case of correct decoding, the base station sends the control instruction of reducing the transmission power to the mobile terminal, and sends the control instruction of increasing the transmission power to the mobile terminal before the current TTI ends.

Step 80 is the same as Step 30, and will not be elaborated herein.

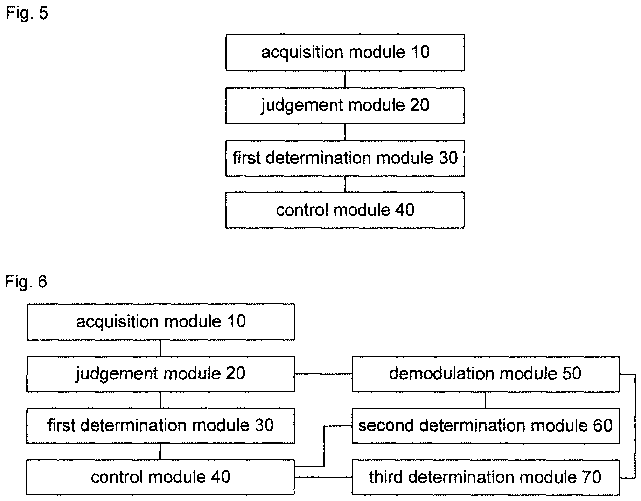

Referring to Fig. 5, Fig. 5 is a structure diagram of a first embodiment of a device for controlling transmission power of a mobile terminal according to the disclosure, the device includes a base station, and the base station includes: an acquisition module 10, a judgement module 20 connected with the acquisition module 10, a first determination module 30 connected with the judgement module 20 and a control module 40 connected with the first determination module 30, in which:
the acquisition module 10 is configured to acquire, from a buffer module, a TFCI and TFC of a data frame transmitted in a previous TTI by a mobile terminal;
the judgement module 20 is configured to judge whether the data frame is a speech frame according to the acquired TFCI and TFC;
the first determination module 30 is configured to, if the data frame is a speech frame, determine that a data frame transmitted in a current TTI by the mobile terminal is a valid data frame; and
the control module 40 is configured to decode the determined valid data frame when the data frame transmitted in the current TTI is a valid data frame, and in case of correct decoding, send a control instruction of reducing transmission power to the mobile terminal, and send a control instruction of increasing the transmission power to the mobile terminal before the current TTI ends.

The base station establishes a communication connection with the mobile terminal, and the mobile terminal performs data interaction with the base station to implement an AMR speech service according to a TTI. The TTI may be 20ms or more than 20ms, and is, for example, 20ms in the embodiment.

When receiving the data frame transmitted in the current TTI by the mobile terminal, the acquisition module 10 acquires, from the buffer module, the TFCI and TFC of the data frame transmitted in the previous TTI by the mobile terminal, and the judgement module 20 judges whether the data frame transmitted in the previous TTI is a speech frame according to the TFCI and TFC of the data frame transmitted in the previous TTI.

In the AMR speech service, a data frame transmitted in a TTI may have totally 20 TFCIs including 0, 1, 2, 3, 4......19, that is, there are 20 TFCs, specifically as shown in Fig. 2, and DCH(Trch0) represents a size of a first channel, DCH(Trch1) represents a size of a second channel, DCH(Trch2) represents a size of a third channel, DCH(Trch3) represents a size of a fourth channel, and a signalling frame is transmitted by DCH(Trch3); when the TFCI is 0, it is indicated that the data frame is a null data frame; when the TFC includes a transmission format of 1*39 (such as a shaded part in Fig. 2, the TFCIs are 1 and 11), it is indicated that the data frame is an SID (or comfort noise frame); when the TFC only includes a transmission format of 1*148, it is indicated that the data frame is a non-null data frame, but is also not a speech frame; and TFCs of which TFCIs are 2, 3, 4, 5, 6, 7, 8, 9, 12, 13, 14, 15, 16, 17, 18 and 19 correspond to TFCs including speech frames.

In the AMR speech service, an AMR speech includes a speech frame and an SID (or comfort noise frame), Fig. 3 describes a sending characteristic of a data frame of an AMR speech service (S represents speech, F represents SID_First, U represents SID_update and N represents no data), the SID is divided into SID First and SID Update, and SID First marks beginning of a segment of silence; a segment of continuous silence begins with SSID First, and subsequently includes SID Update and null data frames; an interval between SID First and the first SID Update includes 2 frames, and the 2 frames are null frames; and an interval between SID Update includes 7 frames, and the 7 frames are also null frames. From Fig. 3, it can be seen that a speech frame is followed by a speech frame or SID First, that is, the speech frame is followed by a valid data frame rather than a null data frame.

The judgement module 20 includes a judgement unit configured to judge that the data frame transmitted in the previous TTI is a speech frame if the acquired TFCI is not 0 and the TFC does not include a transmission format of 1*39 or the TFC includes not only a transmission format of 1*148.

The control module 40 is configured to decode the determined valid data frame transmitted in the current TTI when the data frame transmitted in the current TTI is a valid data frame, and send a power control instruction to the mobile terminal according to a decoding result.

The control module 40 includes a control unit configured to decode the determined valid data frame in an Lth timeslot of the current TTI, and in case of correct decoding, send a control instruction of reducing the transmission power to the mobile terminal, and send the control instruction of increasing the transmission power to the mobile terminal in an Nth timeslot before the current TTI ends. In the embodiment, the TTI is 20ms, the TTI includes 30 timeslots, and the control unit primarily decodes the data frame transmitted in the current TTI in the Lth (L is a positive integer, L is smaller than the total number T of timeslots in the TTI, and for example, L is smaller than 30) timeslot of the current TTI, and in case of correct primary decoding, sends the control instruction of reducing the transmission power to the mobile terminal, and sends the control instruction of increasing the transmission power to the mobile terminal in the Nth timeslot before the current TTI ends; and in case of failed primary decoding, data transmitted in the current TTI may be secondarily decoded, the data frame transmitted in the current TTI is secondarily decoded in a Kth (K is a positive integer, K is smaller than the total number T of the timeslots in the TTI, and K is more than L) timeslot of the current TTI, and in case of correct secondary decoding, the control instruction of reducing the transmission power is sent to the mobile terminal, and the control instruction of increasing the transmission power is sent to the mobile terminal in the Nth (N is a positive integer, and N is smaller than T) before the current TTI ends. L, N and K may be set according to a practical requirement.

The control unit sends the control instruction of reducing the transmission power to the mobile terminal, and for example: the control instruction of reducing the transmission power may be a control instruction of reducing the transmission power by 1dB; and the control unit sends the control instruction of increasing the transmission power to the mobile terminal, and for example: the control instruction of increasing the transmission power may be a control instruction of recovering original normal transmission power of the mobile terminal or a control instruction of increasing the transmission power of the mobile terminal to be higher than the original normal transmission power.

Referring to Fig. 6, Fig. 6 is a structure diagram of a second embodiment of a device for controlling transmission power of a mobile terminal according to an embodiment of the disclosure.

Based on the first embodiment of the device for controlling the transmission power of the mobile terminal, the base station further includes a demodulation module 50 connected with the judgement module 20, a second determination module 60 connected with the demodulation module 50 and a third determination module 70 connected with the demodulation module 50, and the second determination module 60 and the third determination module 70 are connected with the control module 40 respectively, in which:
the demodulation module 50 is configured to, when the data frame is not a speech frame, demodulate first M timeslots of the data frame transmitted in the current TTI to obtain TFCIs;
the second determination module 60 is configured to determine that the data frame transmitted in the current TTI by the mobile terminal is a null data frame when all of the TFCIs obtained by demodulating the M timeslots are 0; and
the third determination module 70 is configured to determine that the data frame transmitted in the current TTI by the mobile terminal is a valid data frame when all of the TFCIs obtained by demodulating the M timeslots are not 0.

The control module 40 is further configured to, when the data frame transmitted in the current TTI is a null data frame, send the control instruction of reducing the transmission power to the mobile terminal, and send the control instruction of increasing the transmission power to the mobile terminal before the current TTI ends.

M is valued to be a positive integer, and is smaller than the total number T of the timeslots in the TTI, and M is less than or equal to L. M may be set according to a practical requirement.

The demodulation module 50 is configured to, when a judgement result of the judgement module 20 indicates that the data frame transmitted in the previous TTI is not a speech frame, demodulate the first M timeslots of the data frame transmitted in the current TTI to obtain the TFCIs, and M TFCIs may be obtained.

The control module 40 is configured to, when the data frame transmitted in the current TTI by the mobile terminal is a null data frame, send the control instruction of reducing the transmission power to the mobile terminal, and send the control instruction of increasing the transmission power to the mobile terminal before the current TTI ends. The base station sends the control instruction of reducing the transmission power to the mobile terminal, and for example: the control instruction of reducing the transmission power may be a control instruction of reducing the transmission power by 1dB; and the base station sends the control instruction of increasing the transmission power to the mobile terminal, and for example: the control instruction of increasing the transmission power may be a control instruction of recovering the original normal transmission power of the mobile terminal or a control instruction of increasing the transmission power of the mobile terminal to be higher than the original normal transmission power. During specific implementation, the operation that the control module sends the control instruction of increasing the transmission power to the mobile terminal before the current TTI ends may be implemented as follows: the control module sends the control instruction of increasing the transmission power to the mobile terminal in the Nth (N is a positive integer and N is smaller than T) timeslot before the current TTI ends.

In some embodiments provided by the disclosure, it should be understood that the disclosed equipment and method may be implemented in other forms. The equipment embodiment described above is only schematic, and for example, division of the units is only logic function division, and other division manners may be adopted during practical implementation. For example, multiple units or components may be combined or integrated into another system, or some characteristics may be neglected executed. In addition, coupling or direct coupling or communication connection between each displayed or discussed component may be indirect coupling or communication connection implemented through some interfaces, equipment or units, and may also be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve a purpose of the solutions of the embodiment according to a practical requirement.

In addition, each function unit in each embodiment of the disclosure may be integrated into a processing unit, each unit may also exist independently, and two or more than two units may also be integrated into a unit. The integrated unit may be implemented in a hardware form, and may also be implemented in form of combining hardware and a software function unit.

Those skilled in the art should know that: all or part of the steps of the method embodiment may be implemented by related hardware instructed through a program, the program may be stored in a computer-readable storage medium, and the program is executed to execute the steps of the method embodiment; and the storage medium includes: various media capable of storing program codes, such as mobile storage equipment, a Read-Only Memory (ROM), a Random Access Memory (RAM), a magnetic disk or a compact disc.

Or, when being implemented in form of software function unit and sold or used as an independent product, the integrated unit of the disclosure may also be stored in a computer-readable storage medium. Based on such an understanding, the technical solutions of the embodiment of the disclosure substantially or parts making contributions to the related technology may be embodied in form of software product, and the computer software product is stored in a storage medium, including a plurality of instructions configured to enable a piece of computer equipment (which may be a personal computer, a server, network equipment or the like) to execute all or part of the method of each embodiment of the disclosure. The storage medium includes: various media capable of storing program codes such as mobile storage equipment, a ROM, a RAM, a magnetic disk or a compact disc.

The above is only the specific implementation mode of the disclosure and not intended to limit the scope of protection of the disclosure, and any variations or replacements apparent to those skilled in the art within the technical scope of the disclosure shall fall within the scope of protection of the disclosure. Therefore, the scope of protection of the disclosure shall be subject to the scope of protection of the claims.

### INDUSTRIAL APPLICABILITY

The disclosure discloses the method and device for controlling the transmission power of the mobile terminal, specifically, the base station acquires, from the buffer module, the TFCI and TFC of the data frame transmitted in the previous TTI by the mobile terminal, and judges whether the data frame is a speech frame according to the acquired TFCI and TFC; if the data frame is a speech frame, the base station determines that the data frame transmitted in the current TTI by the mobile terminal is a valid data frame; and the determined valid data frame is decoded, and in case of correct decoding, the base station sends the control instruction of reducing the transmission power to the mobile terminal, and sends the control instruction of increasing the transmission power to the mobile terminal before the current TTI ends. Therefore, the transmission power of the mobile terminal may be reduced, and meanwhile, accuracy of judgement about whether the data frame transmitted in the current TTI is a valid data frame is improved to ensure the communication quality of the speech service.

## Claims

1. A method for controlling transmission power of a mobile terminal, the method comprising:
acquiring (S10), by a base station from a buffer module, a Transport Format Combination Indicator, TFCI and Transport Format Combination, TFC, of a data frame transmitted in a previous Transmission Time Interval, TTI, by the mobile terminal, and judging whether the data frame is a speech frame according to the acquired TFCI and TFC;
if the data frame is a speech frame, determining (S20), by the base station, that a data frame transmitted in a current TTI by the mobile terminal is a valid data frame; and decoding (S30) the determined valid data frame;
wherein the step of decoding (S30) the determined valid data frame comprises:
in case of correct decoding, sending, by the base station, a control instruction of reducing transmission power to the mobile terminal, and sending a control instruction of increasing the transmission power to the mobile terminal before the current TTI ends.

2. The method according to claim 1, further comprising: after the step of acquiring, by the base station from the buffer module, the TFCI and TFC of the data frame transmitted in the previous TTI by the mobile terminal and judging whether the data frame is a speech frame according to the acquired TFCI and TFC,
demodulating, by the base station, first M timeslots of the data frame transmitted in the current TTI to obtain TFCIs if the data frame is not a speech frame;
if all of the TFCIs obtained by demodulating the M timeslots are 0, determining (S50) that the data frame transmitted in the current TTI by the mobile terminal is a null data frame; and sending (S60), by the base station, the control instruction of reducing the transmission power to the mobile terminal, and sending the control instruction of increasing the transmission power to the mobile terminal before the current TTI ends.

3. The method according to claim 2, further comprising: after the step of demodulating the first M timeslots of the data frame transmitted in the current TTI to obtain the TFCIs if the data frame is not a speech frame,
determining (S70) that the data frame transmitted in the current TTI by the mobile terminal is a valid data frame if all of the TFCIs obtained by demodulating the M timeslots are not 0; and
decoding (S80) the determined valid data frame, and in case of correct decoding, sending, by the base station, the control instruction of reducing the transmission power to the mobile terminal, and sending the control instruction of increasing the transmission power to the mobile terminal before the current TTI ends.

4. The method according to claim 1, wherein the step of acquiring, by the base station from the buffer module, the TFCI and TFC of the data frame transmitted in the previous TTI by the mobile terminal and judging whether the data frame is a speech frame according to the acquired TFCI and TFC comprises:
acquiring, by the base station from the buffer module, the TFCI and TFC of the data frame transmitted in the previous TTI by the mobile terminal; and
judging that the data frame is a speech frame if the acquired TFCI is not 0 and the TFC does not comprise a transmission format of 1*39 or the TFC comprises not only a transmission format of 1*148.

5. The method according to claim 1 or 3, wherein the step of decoding the determined valid data frame, and in case of correct decoding, sending, by the base station, the control instruction of reducing the transmission power to the mobile terminal, and sending the control instruction of increasing the transmission power to the mobile terminal before the current TTI ends comprises:
decoding the determined valid data frame in an Lth timeslot of the current TTI, and in case of correct decoding, sending, by the base station, the control instruction of reducing the transmission power to the mobile terminal, and sending the control instruction of increasing the transmission power to the mobile terminal in an Nth timeslot before the current TTI ends.

6. A device for controlling transmission power of a mobile terminal, the device comprising a base station, the base station comprising:
an acquisition module (10) configured to acquire, from a buffer module, a Transport Format Combination Indicator, TFCI, and Transport Format Combination ,TFC , of a data frame transmitted in a previous Transmission Time Interval, TTI, by a mobile terminal;
a judgement module (20) configured to judge whether the data frame is a speech frame according to the acquired TFCI and TFC;
a first determination module (30) configured to, if the data frame is a speech frame, determine that a data frame transmitted in a current TTI by the mobile terminal is a valid data frame; and
a control module (40) configured to decode the determined valid data frame when the data frame transmitted in the current TTI is a valid data frame, wherein the control module (40) is further configured to, in case of correct decoding, send a control instruction of reducing transmission power to the mobile terminal, and send a control instruction of increasing the transmission power to the mobile terminal before the current TTI ends.

7. The device according to claim 6, wherein the base station further comprises a demodulation module (50) and a second determination module (60),
the demodulation module (50) is configured to, if the data frame is not a speech frame, demodulate first M timeslots of the data frame transmitted in the current TTI to obtain TFCIs;
the second determination module (60) is configured to determine that the data frame transmitted in the current TTI by the mobile terminal is a null data frame when all of the TFCIs obtained by demodulating the M timeslots are 0; and
the control module (40) is further configured to, when the data frame transmitted in the current TTI by the mobile terminal is a null data frame, send the control instruction of reducing the transmission power to the mobile terminal, and send the control instruction of increasing the transmission power to the mobile terminal before the current TTI ends.

8. The device according to claim 7, wherein the base station further comprises a third determination module (70),
the third determination module (70) is configured to determine that the data frame transmitted in the current TTI by the mobile terminal is a valid data frame if all of the TFCIs obtained by demodulating the M timeslots are not 0.

9. The device according to claim 6, wherein the judgement module (20) comprises a judgement unit configured to judge that the data frame is a speech frame if the acquired TFCI is not 0 and the TFC does not comprise a transmission format of 1*39 or the TFC comprises not only a transmission format of 1*148.

10. The device according to claim 6, wherein the control module (40) comprises a control unit configured to decode the determined valid data frame in an Lth timeslot of the current TTI, and in case of correct decoding, send the control instruction of reducing the transmission power to the mobile terminal, and send the control instruction of increasing the transmission power to the mobile terminal in an Nth timeslot before the current TTI ends.

## Patentansprüche

1. Verfahren zum Steuern der Sendeleistung eines mobilen Endgeräts, wobei das Verfahren umfasst:
Erfassen (S10), durch eine Basisstation von einem Puffermodul, eines Transportformatkombinationsindikators, TFCI, und einer Transportinformationskombination, TFC, eines Datenrahmens, der in einem vorhergehenden Sendezeitintervall, TTI, durch das mobile Endgerät gesendet worden ist, und Beurteilen, ob der Datenrahmen ein Sprachrahmen gemäß den erfassten TFCI und TFC ist;
wenn der Datenrahmen ein Sprachrahmen ist, Bestimmen (S20), durch die Basisstation, dass ein Datenrahmen, der in einem gegenwärtigen TTI durch das mobile Endgerät gesendet wird, ein gültiger Datenrahmen ist; und Dekodieren (S30) des bestimmten gültigen Datenrahmens;
wobei der Schritt des Dekodierens (S30) des bestimmten gültigen Datenrahmens umfasst:
in dem Fall eines korrekten Dekodierens, das Senden, durch die Basisstation, einer Steuerungsanweisung des Verminderns der Sendeleistung zu dem mobilen Endgerät, und das Senden einer Steuerungsanweisung des Erhöhens der Sendeleistung zu dem mobilen Endgerät, bevor das gegenwärtige TTI endet.

2. Verfahren nach Anspruch 1, ferner umfassend: nach dem Schritt des Erfassens, durch die Basisstation von dem Puffermodul, des TFCI und der TFC des Datenrahmens, der in dem vorhergehenden TTI durch das mobile Endgerät gesendet worden ist, und des Beurteilens, ob der Datenrahmen ein Sprachrahmen gemäß den erfassten TFCI und TFC ist,
das Demodulieren, durch die Basisstation, von ersten M Zeitschlitzen des Datenrahmens, der in dem gegenwärtigen TTI gesendet wird, zum Erhalten von TFCIs, wenn der Datenrahmen kein Sprachrahmen ist;
wenn alle TFCIs, die durch Demodulieren der M Zeitschlitze erhalten worden sind, 0 sind, das Bestimmen (S50), dass der Datenrahmen, der in dem gegenwärtigen TTI durch das mobile Endgerät gesendet wird, ein Null-Datenrahmen ist; und das Senden (S60), durch die Basisstation, der Steuerungsanweisung des Verminderns der Sendeleistung zu dem mobilen Endgerät, und das Senden der Steuerungsanweisung des Erhöhens der Sendeleistung zu dem mobilen Endgerät, bevor das gegenwärtige TTI endet.

3. Verfahren nach Anspruch 2, ferner umfassend: nach dem Schritt des Demodulierens der ersten M Zeitschlitze des Datenrahmens, der in dem gegenwärtigen TTI gesendet wird, zum Erhalten der TFCIs, wenn der Datenrahmen kein Sprachrahmen ist,
das Bestimmen (S70), dass der Datenrahmen, der in dem gegenwärtigen TTI durch das mobile Endgerät gesendet wird, ein gültiger Datenrahmen ist, wenn alle TFCIs, die durch Demodulieren der M Zeitschlitze erhalten worden sind, nicht 0 sind; und
das Dekodieren (S80) des bestimmten gültigen Datenrahmens, und in dem Fall eines korrekten Dekodierens, das Senden, durch die Basisstation, der Steuerungsanweisung des Verminderns der Sendeleistung zu dem mobilen Endgerät, und das Senden der Steuerungsanweisung des Erhöhens der Sendeleistung zu dem mobilen Endgerät, bevor das gegenwärtige TTI endet.

4. Verfahren nach Anspruch 1, bei dem der Schritt des Erfassens, durch die Basisstation von dem Puffermodul, des TFCI und der TFC des Datenrahmens, der in dem vorhergehenden TTI durch das mobile Endgerät gesendet worden ist, und des Beurteilens, ob der Datenrahmen ein Sprachrahmen gemäß den erfassten TFCI und TFC ist, umfasst:
Erfassen, durch die Basisstation von dem Puffermodul, des TFCI und der TFC des Datenrahmens, der in dem vorhergehenden TTI durch das mobile Endgerät gesendet worden ist; und
Beurteilen, dass der Datenrahmen ein Sprachrahmen ist, wenn der erfasste TFCI nicht Null ist und die TFC kein Sendeformat von 1*39 umfasst oder die TFC nicht nur ein Sendeformat von 1*148 umfasst.

5. Verfahren nach Anspruch 1 oder 3, bei dem der Schritt des Dekodierens des bestimmten gültigen Datenrahmens und in dem Fall eines korrekten Dekodierens, des Sendens, durch die Basisstation, der Steuerungsanweisung des Verminderns der Sendeleistung zu dem mobilen Endgerät, und des Sendens der Steuerungsanweisung des Erhöhens der Sendeleistung zu dem mobilen Endgerät, bevor das gegenwärtige TTI endet, umfasst:
das Dekodieren des bestimmten gültigen Datenrahmens in einem L-ten-Zeitschlitz des gegenwärtigen TTI, und in dem Fall eines korrekten Dekodierens, das Senden, durch die Basisstation, der Steuerungsanweisung des Verminderns der Sendeleistung zu dem mobilen Endgerät und das Senden der Steuerungsanweisung des Erhöhens der Sendeleistung zu dem mobilen Endgerät in einem N-ten Zeitschlitz, bevor das gegenwärtige TTI endet.

6. Vorrichtung zu Steuern der Sendeleistung eines mobilen Endgeräts, wobei die Vorrichtung eine Basisstation umfasst, wobei die Basisstation umfasst:
ein Erfassungsmodul (10), das zum Erfassen, von einem Puffermodul, eines Transportformatkombinationsindikators, TFCI, und einer Transportinformationskombination, TFC, eines Datenrahmens, der in einem vorhergehenden Sendezeitintervall, TTI, durch ein mobiles Endgerät gesendet worden ist, ausgebildet ist;
ein Beurteilungsmodul (20), das zum Beurteilen ausgebildet ist, ob der Datenrahmen ein Sprachrahmen gemäß den erfassten TFCI und TFC ist;
ein erstes Bestimmungsmodul (30), das ausgebildet ist zum, wenn der Datenrahmen ein Sprachrahmen ist, Bestimmen, dass ein Datenrahmen, der in einem gegenwärtigen TTI durch das mobile Endgerät gesendet wird, ein gültiger Datenrahmen ist; und
ein Steuerungsmodul (40), das zum Dekodieren des bestimmten gültigen Datenrahmens ausgebildet ist, wenn der in dem gegenwärtigen TTI gesendete Datenrahmen ein gültiger Datenrahmen ist, wobei das Steuerungsmodul (40) ferner ausgebildet ist, in dem Fall eine korrekten Dekodierens, eine Steuerungsanweisung des Verminderns der Sendeleistung zu dem mobilen Endgerät zu senden, und eine Steuerungsanweisung des Erhöhens der Sendeleistung zu dem mobilen Endgerät zu senden, bevor das gegenwärtige TTI endet.

7. Vorrichtung nach Anspruch 6, bei der die Basisstation ferner ein Demodulierungsmodul (50) und ein zweites Bestimmungsmodul (60) umfasst,
wobei das Demodulierungsmodul (50) ausgebildet ist zum, wenn der Datenrahmen kein Sprachrahmen ist, Demodulieren von ersten M Zeitschlitzen des Datenrahmens, der in dem gegenwärtigen TTI gesendet wird, um TFCIs zu erhalten;
das zweite Bestimmungsmodul (60) ausgebildet ist zum Bestimmen, dass der Datenrahmen, der in dem gegenwärtigen TTI durch das mobile Endgerät gesendet wird, ein Null-Datenrahmen ist, wenn alle TFCIs, die durch Demodulieren der M Zeitschlitze erhalten werden, 0 sind; und
das Steuerungsmodul (40) ferner so ausgebildet ist, dass es dann, wenn der Datenrahmen, der in dem gegenwärtigen TTI durch das mobile Endgerät gesendet wird, ein Null-Datenrahmen ist, die Steuerungsanweisung des Verminderns der Sendeleistung zu dem mobilen Endgerät sendet, und eine Steuerungsanweisung des Erhöhens der Sendeleistung zu dem mobilen Endgerät sendet, bevor das gegenwärtige TTI endet.

8. Vorrichtung nach Anspruch 7, bei der die Basisstation ferner ein drittes Bestimmungsmodul (70) umfasst,
wobei das dritte Bestimmungsmodul (70) zum Bestimmen ausgebildet ist, dass der Datenrahmen, der in dem gegenwärtigen TTI durch das mobile Endgerät gesendet wird, ein gültiger Datenrahmen ist, wenn alle durch Demodulieren der M Zeitschlitze erhaltenen TFCIs nicht 0 sind.

9. Vorrichtung nach Anspruch 6, bei der das Beurteilungsmodul (20) eine Beurteilungseinheit umfasst, die zum Beurteilen ausgebildet ist, dass der Datenrahmen ein Sprachrahmen ist, wenn der erfasste TFCI nicht Null ist und die TFC kein Sendeformat von 1*39 umfasst oder die TFC nicht nur ein Sendeformat von 1*148 umfasst.

10. Vorrichtung nach Anspruch 6, bei der das Steuerungsmodul (40) eine Steuerungseinheit umfasst, die zum Dekodieren des bestimmten gültigen Datenrahmens in einem L-ten-Zeitschlitz des gegenwärtigen TTI, und in dem Fall eines korrekten Dekodierens, zum Senden der Steuerungsanweisung des Verminderns der Sendeleistung zu dem mobilen Endgerät und zum Senden der Steuerungsanweisung des Erhöhens der Sendeleistung zu dem mobilen Endgerät in einem N-ten Zeitschlitz, bevor das gegenwärtige TTI endet, ausgebildet ist.

## Revendications

1. Procédé de commande de puissance de transmission d'un terminal mobile, le procédé comprenant :
l'acquisition (S10), par une station de base depuis un module de mémoire tampon, d'un indicateur de combinaison de format de transport, TFCI et d'une combinaison de format de transport, TFC, d'une trame de données transmise dans un intervalle de temps de transmission, TTI, antérieur, par le terminal mobile, et le fait d'estimer si la trame de données est une trame vocale selon le TFCI et la TFC acquis ;
si la trame de données est une trame vocale, la détermination (S20), par la station de base, qu'une trame de données transmise dans un TTI actuel par le terminal mobile est une trame de données valide ; et le décodage (S30) de la trame de données valide déterminée ;
dans lequel l'étape de décodage (S30) de la trame de données valide déterminée comprend :
en cas de décodage correct, l'envoi, par la station de base, d'une instruction de commande de réduction de puissance de transmission au terminal mobile, et l'envoi d'une instruction de commande d'augmentation de la puissance de transmission au terminal mobile avant que le TTI actuel se termine.

2. Procédé selon la revendication 1, comprenant en outre : après l'étape d'acquisition, par la station de base depuis le module de mémoire tampon, du TFCI et de la TFC de la trame de données transmise dans le TTI antérieur par le terminal mobile et d'estimation pour savoir si la trame de données est une trame vocale selon le TFCI et la TFC acquis,
la démodulation, par la station de base, de M premiers créneaux temporels de la trame de données transmise dans le TTI actuel pour obtenir des TFCI si la trame de données n'est pas une trame vocale ;
si tous les TFCI obtenus en démodulant les M créneaux temporels valent 0, la détermination (S50) que la trame de données transmise dans le TTI actuel par le terminal mobile est une trame de données nulle ; et l'envoi (S60), par la station de base, de l'instruction de commande de réduction de la puissance de transmission au terminal mobile, et l'envoi de l'instruction de commande d'augmentation de la puissance de transmission au terminal mobile avant que le TTI actuel se termine.

3. Procédé selon la revendication 2, comprenant en outre : après l'étape de démodulation des M premiers créneaux temporels de la trame de données transmise dans le TTI actuel pour obtenir les TFCI si la trame de données n'est pas une trame vocale,
la détermination (S70) que la trame de données transmise dans le TTI actuel par le terminal mobile est une trame de données valide si tous les TFCI obtenus en démodulant les M créneaux temporels ne valent pas 0 ; et
le décodage (S80) de la trame de données valide déterminée, et en cas de décodage correct, l'envoi, par la station de base, de l'instruction de commande de réduction de la puissance de transmission au terminal mobile, et l'envoi de l'instruction de commande d'augmentation de la puissance de transmission au terminal mobile avant que le TTI actuel se termine.

4. Procédé selon la revendication 1, dans lequel l'étape d'acquisition, par la station de base depuis le module de mémoire tampon, du TFCI et de la TFC de la trame de données transmise dans le TTI antérieur par le terminal mobile et d'estimation pour savoir si la trame de données est une trame vocale selon le TFCI et la TFC acquis comprend :
l'acquisition, par la station de base depuis le module de mémoire tampon, du TFCI et de la TFC de la trame de données transmise dans le TTI antérieur par le terminal mobile ; et
l'estimation que la trame de données est une trame vocale si le TFCI acquis ne vaut pas 0 et que la TFC ne comprend pas de format de transmission de 1*39 ou la TFC ne comprend pas seulement un format de transmission de 1*148.

5. Procédé selon la revendication 1 ou 3, dans lequel l'étape de décodage de la trame de données valide déterminée, et en cas de décodage correct, d'envoi, par la station de base, de l'instruction de commande de réduction de la puissance de transmission au terminal mobile, et d'envoi de l'instruction de commande d'augmentation de la puissance de transmission au terminal mobile avant que le TTI actuel se termine comprend :
le décodage de la trame de données valide déterminée dans un L^{ième} créneau temporel du TTI actuel, et en cas de décodage correct, l'envoi, par la station de base, de l'instruction de commande de réduction de la puissance de transmission au terminal mobile, et l'envoi de l'instruction de commande d'augmentation de la puissance de transmission au terminal mobile dans un N^{ième} créneau temporel avant que le TTI actuel se termine.

6. Dispositif de commande de puissance de transmission d'un terminal mobile, le dispositif comprenant
une station de base, la station de base comprenant :
un module d'acquisition (10) configuré pour acquérir, depuis un module de mémoire tampon, un indicateur de combinaison de format de transport, TFCI, et une combinaison de format de transport, TFC, d'une trame de données transmise dans un intervalle de temps de transmission, TTI, antérieur, par un terminal mobile ;
un module d'estimation (20) configuré pour estimer si la trame de données est une trame vocale selon le TFCI et la TFC acquis ;
un premier module de détermination (30) configuré, si la trame de données est une trame vocale, pour déterminer qu'une trame de données transmise dans un TTI actuel par le terminal mobile est une trame de données valide ; et
un module de commande (40) configuré pour décoder la trame de données valide déterminée lorsque la trame de données transmise dans le TTI actuel est une trame de données valide, dans lequel le module de commande (40) est en outre configuré, en cas de décodage correct, pour envoyer une instruction de commande de réduction de puissance de transmission au terminal mobile, et envoyer une instruction de commande d'augmentation de la puissance de transmission au terminal mobile avant que le TTI actuel se termine.

7. Dispositif selon la revendication 6, dans lequel la station de base comprend en outre un module de démodulation (50) et un deuxième module de détermination (60),
le module de démodulation (50) est configuré, si la trame de données n'est pas une trame vocale, pour démoduler M premiers créneaux temporels de la trame de données transmise dans le TTI actuel pour obtenir des TFCI ;
le deuxième module de détermination (60) est configuré pour déterminer que la trame de données transmise dans le TTI actuel par le terminal mobile est une trame de données nulle lorsque tous les TFCI obtenus en démodulant les M créneaux temporels valent 0 ; et
le module de commande (40) est en outre configuré, lorsque la trame de données transmise dans le TTI actuel par le terminal mobile est une trame de données nulle, pour envoyer l'instruction de commande de réduction de la puissance de transmission au terminal mobile, et envoyer l'instruction de commande d'augmentation de la puissance de transmission au terminal mobile avant que le TTI actuel se termine.

8. Dispositif selon la revendication 7, dans lequel la station de base comprend en outre un troisième module de détermination (70),
le troisième module de détermination (70) est configuré pour déterminer que la trame de données transmise dans le TTI actuel par le terminal mobile est une trame de données valide si tous les TFCI obtenus en démodulant les M créneaux temporels ne valent pas 0.

9. Dispositif selon la revendication 6, dans lequel le module d'estimation (20) comprend une unité d'estimation configurée pour estimer que la trame de données est une trame vocale si le TFCI acquis ne vaut pas 0 et la TFC ne comprend pas de format de transmission de 1*39 ou la TFC ne comprend pas seulement un format de transmission de 1*148.

10. Dispositif selon la revendication 6, dans lequel le module de commande (40) comprend une unité de commande configurée pour décoder la trame de données valide déterminée dans un L^{ième} créneau temporel du TTI actuel, et en cas de décodage correct, envoyer l'instruction de commande de réduction de la puissance de transmission au terminal mobile, et envoyer l'instruction de commande d'augmentation de la puissance de transmission au terminal mobile dans un N^{ième} créneau temporel avant que le TTI actuel se termine.
